# EUROPÄISCHE PATENTSCHRIFT

(11) **EP 3 562 707 B1**
(45) Veröffentlichungstag und Bekanntmachung des Hinweises auf die Patenterteilung: **29.01.2020**
(21) Anmeldenummer: 18713155.2
(22) Anmeldetag: 15.03.2018
(51) Int. Cl.: B60Q 5/00

(54) **KRAFTFAHZEUG UMFASSEND EIN AKUSTISCHES FAHRZEUGWARNSYSTEM MIT INTEGRIERTER FUNKTION ZUR WARN-SCHALLZEICHENABGABE**
MOTOR VEHICLE HAVING AN ACOUSTIC VEHICLE ALERTING SYSTEM WITH AN INTEGRATED FUNCTION FOR OUTPUTTING ACOUSTIC WARNING SIGNALS
VÉHICULE AUTOMOBILE AVEC UN AVERTISSEUR ACOUSTIQUE INTÉGRANT UNE FONCTION D'ÉMISSION DE SIGNAUX SONORES D'AVERTISSEMENT

(30) Priorität: 15.03.2017 DE 102017204332
(43) Veröffentlichungstag der Anmeldung: 06.11.2019
(73) Patentinhaber: Audi AG, 85045 Ingolstadt (DE)
(72) Erfinder: WERNER, Sebastian, 85296 Rohrbach (DE)
(86) Internationale Anmeldenummer: PCT/EP2018/056472
(87) Internationale Veröffentlichungsnummer: WO 2018/167188

(56) Entgegenhaltungen:
- DE-A1-102009 039 632
- JP-A- 2011 245 966
- US-A1- 2012 299 717
- US-A1- 2014 363 019

## Beschreibung

Die Erfindung betrifft ein Kraftfahrzeug umfassend ein akustisches Fahrzeugwarnsystem mit integrierter Funktion zur Warn-Schallzeichenabgabe.

Aus Sicherheitsgründen ist es vorgesehen, bzw. in manchen Ländern gesetzlich vorgeschrieben, dass ein elektrisch betriebenes Kraftfahrzeug bzw. ein Hybridkraftfahrzeug ein akustisches Fahrzeugwarnsystem (Acoustic Vehicle Alerting System, kurz: AVAS) umfasst. Das akustische Fahrzeugwarnsystem ist eine Vorrichtung, welche zur Ausgabe von Dauerschallzeichen an die Umgebung des Kraftfahrzeugs eingerichtet ist, wodurch die Umgebung auf das Kraftfahrzeug aufmerksam gemacht werden soll. Ein AVAS-Fahrzeugwarnsystem ist beispielsweise in dem Dokument ECE/TRANS/WP.29/2016/26 der Wirtschaftskommission für Europa der Vereinten Nationen beschrieben. Die Ausgabe der Dauerschallzeichen erfolgt kontinuierlich, insbesondere ohne ein Zutun eines Fahrers, und soll den Wegfall der Verbrennungsmotorgeräusche kompensieren. Dadurch wird es anderen Verkehrsteilnehmern ermöglicht, ein elektrisch angetriebenes Kraftfahrzeug akustisch wahrzunehmen. Dabei kann es vorgesehen sein, dass Dauerschallzeichen Verbrennungsmotorengeräuschen nachempfunden sind.

Es ist ebenso vorgeschrieben, dass Kraftfahrzeuge für den Straßenverkehr eine Vorrichtung für Warn-Schallzeichen umfassen müssen, die bei Bedarf vom Fahrer und/oder einem Autopiloten betätigt werden können. Dabei kann es sich beispielsweise um Hupen oder Hörner handeln. Die von dieser Einrichtung abgegebenen Warn-Schallzeichen dienen dazu, gefährdete Verkehrsteilnehmer auf das Herannahen eines Kraftfahrzeugs aufmerksam zu machen. Die Abgabe eines Warn-Schallzeichen erfolgt in der Regel durch die Betätigung einer Vorrichtung am Lenkrad des Kraftfahrzeugs durch den Fahrer. In der Regel ist diese Einrichtung als Aufschlaghorn, bzw. als elektromagnetische Fanfare verwirklicht, welche sich an der Fahrzeugfront befindet. Aufgrund der Anbringung dieser Einrichtung im Bereich der Anströmflächen der Kühlluft kann es sein, dass sie eine negative Auswirkung auf die Kühlleistung hat.

Aufgrund dieser Problematik ist es vorteilhaft, die Möglichkeit einer Warn-Schallzeichenabgabe in eine andere Vorrichtung zu integrieren, wodurch eine gesonderte Vorrichtung zur Warn-Schallzeichenabgabe eingespart werden kann.

Eine solche Vorrichtung ist in der DE 103 27 322 A1 beschrieben. Das beschriebene System ist ein aktives Geräuschdämpfungssystem zum Einsatz in Fahrzeugen, welches dazu eingerichtet ist, als Reaktion auf die Betätigung eines Hupenschalters einen Hupenton abzugeben. Dabei kann das System derart eingerichtet sein, dass die aktive Geräuschdämpfung als Reaktion auf eine Hupenschalterbetätigung vorübergehend unterbrochen wird.

Nachteilig an der Verwendung eines Geräuschdämpfungssystems für die Ausgabe von Warn-Schallzeichen kann der Umstand sein, dass dieses an einer Stelle des Kraftfahrzeugs angebracht sein kann, welche eine Dämpfung der Kraftfahrzeuggeräusche für einen Innenraum ermöglicht, jedoch nicht für eine Ausgabe von Geräuschen an die Umgebung geeignet ist.

Die DE 299 11 360 U1 beschreibt eine Sondersignalanlage und ein getarntes Einsatzfahrzeug mit einer solchen Sondersignalanlage, welche zur Erzeugung eines normalen Hupentonsignals eingerichtet ist.

Eine Sondersignalanlage ist zwar in der Regel so in einem Kraftfahrzeug verbaut, dass sie eine effiziente Abgabe von Geräuschen in die Umgebung des Kraftfahrzeugs ermöglicht, jedoch umfassen nur Einsatzfahrzeuge eine Sondersignalanlage. Aufgrund dieser Tatsache ist diese Lösung im Allgemeinen nicht verwendbar.

Ein gattungsgemäßes Kraftfahrzeug ist aus der US 2014/0363019 A1 bekannt.

Aufgabe der vorliegenden Erfindung ist es, die Zahl der Bauteile zur Erzeugung von Geräuschen in einem Kraftfahrzeug zu reduzieren.

Die Aufgabe wird durch den Gegenstand des unabhängigen Patentanspruchs gelöst. Vorteilhafte Weiterbildungen der Erfindung sind durch die Merkmale des abhängigen Patentanspruchs offenbart.

Durch die Erfindung wird ein Kraftfahrzeug mit einem AVAS-Fahrzeugwarnsystem bereitgestellt. Dieses umfasst eine Steuereinheit und zumindest einen Lautsprecher, welcher zur Abgabe von Dauerschallzeichen eingerichtet ist. Die Steuereinheit ist dazu eingerichtet zumindest nach einer Betätigung einer Betätigungseinheit, den zumindest einen Lautsprecher über ein Betätigungssignal anzusteuern. Der zumindest eine Lautsprecher ist dazu eingerichtet, nach Empfang des Betätigungssignals ein Warn-Schallzeichen abzugeben. Mit anderen Worten wird durch die Betätigung der Betätigungseinheit ein Warn-Schallzeichen mittels des zumindest einen Lautsprechers des AVAS-Fahrzeugwarnsystems abgegeben.

Bei einem AVAS-Fahrzeugwarnsystem handelt es sich um eine Geräuscherzeugungsvorrichtung, welche dazu eingerichtet ist, im Fahrbetrieb des Kraftfahrzeugs ein Dauerschallzeichen abzugeben, um somit Verkehrsteilnehmer auf die Anwesenheit des Kraftfahrzeugs in der beschriebenen Weise aufmerksam zu machen. Die Abgabe des zumindest einen Dauerschallzeichens erfolgt ohne Zutun des Fahrers. Das zumindest eine Dauerschallzeichen soll die ausbleibenden Verbrennungsmotorengeräusche bei elektrisch angetriebenen Kraftfahrzeugen und Hybridkraftfahrzeugen im elektrischen Antriebsmodus ersetzen, wodurch das Kraftfahrzeug von anderen Verkehrsteilnehmern akustisch wahrgenommen werden kann. Die Erzeugung der Geräusche kann dabei durch zumindest einen Lautsprecher erfolgen, welcher im Bereich des Motors angebracht sein kann. Lautsprecher können derart gestaltet sein, dass sie Frequenzen wiedergeben können, welche das hauptsächlich durch Motoren erzeugte Frequenzspektrum wiedergeben können.

Bei der Steuereinheit kann es sich um einen Mikroprozessor oder einen Mikrocontroller handeln, dieser ist mit dem Lautsprecher verbunden und kann den Lautsprecher über ein Signal ansteuern, welches eine Abgabe eines Tons durch den Lautsprecher bewirkt, welcher abhängig ist von der Art des Signals. Die Steuereinheit kann dazu eingerichtet sein, den Lautsprecher mittels eines Betätigungssignals zur Abgabe eines Warn-Schallzeichens nach einer Betätigung der Betätigungseinheit anzusteuern. Die Steuereinheit kann dazu eingerichtet sein, den Lautsprecher über ein Signal zur Abgabe des Dauerschallzeichens anzusteuern. Die Steuereinheit kann dazu eingerichtet sein, die Beschaffenheit des Dauerschallzeichens an einen Betriebszustand des Kraftfahrzeugs anzupassen. So kann dieses beispielsweise von einem aktuellen Betriebspunkt des Kraftfahrzeugs abhängig sein.

Ein Warn-Schallzeichen ist insbesondere ein akustisches Zeichen, welches über einen vorgebbaren Zeitraum mit gleich bleibenden Grundfrequenzen und frei von Nebengeräuschen abgegeben wird. Der Zeitraum ist abhängig von der Betätigungsdauer der Betätigungseinheit. Das Warn-Schallzeichen erfüllt den Zweck, andere Verkehrsteilnehmer zu warnen.

Bei der Betätigungseinheit handelt es sich um eine Vorrichtung, welche in Reichweite des Kraftfahrzeugfahrers angebracht sein kann. Diese Vorrichtung kann beispielsweise am Lenkrad des Kraftfahrzeugs angebracht und mit der Steuereinheit verbunden sein. Betätigt der Kraftfahrzeugfahrer die Betätigungseinheit, so wird dies durch die Steuereinheit erfasst.

Durch die Erfindung können Warn-Schallzeichen über das akustische Fahrzeugwarnsystem wiedergegeben werden. Dadurch ergibt sich der Vorteil, dass keine Vorrichtung in dem Kraftfahrzeug eingebaut werden muss, welche als einzigen Zweck die Wiedergabe eines Warn-Schallzeichen hat. Aufgrund der Verwendung einer bereits vorhandenen Vorrichtung können somit Bauteile, Kosten, Bauraum und Verkabelung eingespart werden.

Eine Weiterbildung der Erfindung sieht vor, dass die Steuereinheit dazu eingerichtet ist, die Abgabe eines Dauerschallzeichens für den Zeitraum der Abgabe eines Warn-Schallzeichens zu unterbrechen. Mit anderen Worten wird bei der Abgabe eines Warn-Schallzeichens nur dieses Schallzeichen durch den Lautsprecher wiedergegeben. Die Abgabe eines Dauerschallzeichens durch den Lautsprecher wird somit für den Zeitraum einer Warn-Schallzeichenabgabe deaktiviert. Dadurch ergibt sich der Vorteil, dass das Warn-Schallzeichen nicht durch das Dauerschallzeichen überlagert wird und somit deutlicher wahrgenommen werden kann. Zusätzlich können dadurch Vorschriften eingehalten werden, welche die Wiedergabe von Nebengeräuschen während einer Wiedergabe eines Warn-Schallzeichen untersagen.

Die Erfindung sieht vor, dass sich der Lautsprecher unter einer Frontschürze des Kraftfahrzeugs befindet und zur Ausgabe einer Hauptabstrahlrichtung in die Bugrichtung des Kraftfahrzeugs eingerichtet ist. Mit anderen Worten ist der Lautsprecher so eingerichtet, dass das Warn-Schallzeichen in die Vorwärtsfahrtrichtung wiedergegeben wird. Dadurch ergibt sich der Vorteil, dass das Warn-Schallzeichen in Richtung der gewöhnlichen Adressaten des Warn-Schallzeichen abgegeben wird. Somit unterscheidet sich die räumliche Klangabgabe des AVAS-Fahrzeugwarnsystems nicht von einer gewöhnlichen Einrichtung zur Abgabe von Warn-Schallzeichen. Die Hauptabstrahlrichtung ist die Richtung der lautesten Schallabgabe. Die Hauptabstrahlrichtung wird dabei insbesondere in einem Abstand von mindestens 1 m vom Kraftfahrzeug gemessen, so dass auch ein Einfluss von Reflexionen an der Frontschürze und/oder dem Fahruntergrund berücksichtigt sind. Erfindungsgemäß ist ein Lautsprecher nach unten auf den Fahruntergrund ausgerichtet sein und dort durch eine Reflexion wird der vom Lautsprecher abgestrahlte Luftschall in die Hauptabstrahlrichtung umgelenkt.

In einer Weiterbildung ist vorgesehen, dass der zumindest eine Lautsprecher dazu eingerichtet ist, das Warn-Schallzeichen in einem Frequenzbereich von 400-600 Hz mit einem Schalldruckpegel von mindestens 60 dB A (insbesondere mehr als 70 dB A), gemessen in 1 m Abstand, wiederzugeben. Bekannte Warn-Schallzeichen weisen Frequenzen auf, welche im Bereich zwischen 400-600 Hz liegen. Mit anderen Worten ist vorgesehen, dass der zumindest Lautsprecher dazu eingerichtet ist, das Frequenzspektrum eines bekannten Warn-Schallzeichens wiederzugeben. Dadurch ergibt sich der Vorteil, dass das Warn-Schallzeichen auch als solches von Verkehrsteilnehmern identifiziert werden kann.

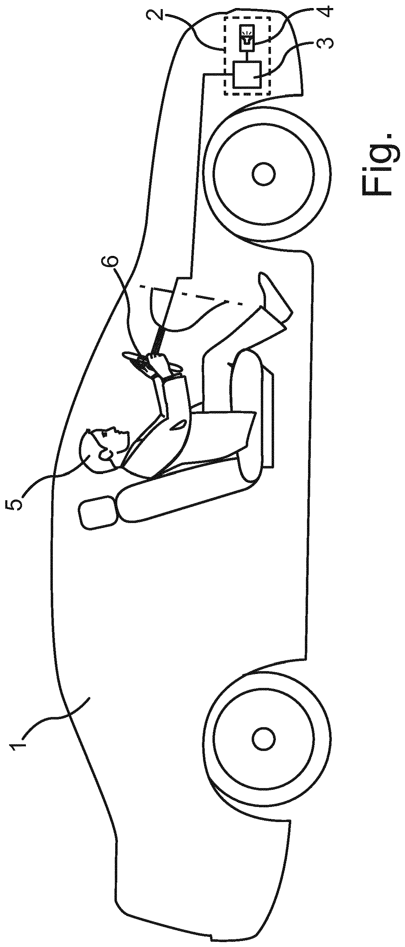

Im Folgenden sind Ausführungsbeispiele der Erfindung beschrieben. Hierzu zeigt die einzige Figur ein Kraftfahrzeug mit einem erfindungsgemäßen AVAS-Fahrzeugwarnsystem.

Bei dem im Folgenden erläuterten Ausführungsbeispiel handelt es sich um eine bevorzugte Ausführungsform der Erfindung. Bei dem Ausführungsbeispielen stellen die beschriebenen Komponenten der Ausführungsform jeweils einzelne Merkmale der Erfindung dar, welche auch einzeln oder in einer anderen als der gezeigten Kombination als Bestandteil der Erfindung gemäß den vorliegenden Patentansprüchen anzusehen sind. Des Weiteren ist die beschriebenen Ausführungsform auch durch weitere der bereits beschriebenen Merkmale der Erfindung ergänzbar.

In der Figur sind funktionsgleiche Elemente jeweils mit denselben Bezugszeichen versehen.

Die einzige Figur zeigt ein Kraftfahrzeug 1, welches ein AVAS-Fahrzeugwarnsystem 2 umfasst. Das AVAS-Fahrzeugwarnsystem 2 kann eine Steuereinheit 3 und einen Lautsprecher 4 umfassen. Die Steuereinheit 3 kann derart mit dem zumindest einen Lautsprecher 4 verbunden sein, dass diese durch Signale der Steuereinheit 3 angesteuert werden können. Die Steuereinheit 3 kann beispielsweise als Mikroprozessor oder Mikrocontroller verwirklicht sein. Der zumindest eine Lautsprecher 4 kann in Abhängigkeit von einem übermittelten Signal Töne abgeben. Die Beschaffenheit der Töne, welche beispielsweise die Frequenzen, die Lautstärke und die Wiedergabedauer umfassen kann, kann durch den Inhalt der Signale definiert sein. Bei dem zumindest einen Lautsprecher 4 kann es sich um einen elektrodynamischen Lautsprecher mit einem integrierten Verstärker handeln. Dieser kann dazu eingerichtet sein, auch Frequenzen im Bereich zwischen 400-600 Hz mit einem Schalldruckpegel von mindestens 60 dB A (insbesondere mehr als 70 dB A), gemessen in 1 m Abstand, wiederzugeben. Um es einem Fahrer 5 des Kraftfahrzeugs 1 zu ermöglichen, die Abgabe eines Warn-Schallzeichens durch das AVAS-Fahrzeugwarnsystem 2 zu ermöglichen, kann beispielsweise das Lenkrad eine Betätigungseinheit 6 umfassen. Eine Betätigung der Betätigungseinheit 6 kann durch die Steuereinheit 3 des akustischen Fahrzeugwarnsystems 2 erfasst werden. Die Steuereinheit 3 kann derart eingerichtet sein, dass sie nach der Erfassung ein Betätigungssignal an den Lautsprecher 4 übermittelt, welches die Abgabe eines Warn-Schallzeichens bewirkt. Es kann sein, dass zum Zeitpunkt der Betätigung der Betätigungseinheit 6 ein Dauerschallzeichen durch das AVAS-Fahrzeugwarnsystem 2 wiedergegeben wird. Die Wiedergabe des Dauerschallzeichens kann durch die Steuereinheit 3 für den Wiedergabezeitraum des Warn-Schallzeichens unterbrochen werden, sodass nur das Warn-Schallzeichen wiedergegeben wird. Der Lautsprecher 4 befindet sich unter einer Frontschürze des Kraftfahrzeugs 1 (nicht gezeigt) und ist derart eingerichtet, dass er durch eine Reflexion auf den Fahruntergrund das Warn-Schallzeichen in die Bugrichtung des Kraftfahrzeugs abgeben kann.

Insgesamt zeigen die Beispiele, wie durch die Erfindung die Zahl der Bauteile zur Erzeugung von Geräuschen in einem Kraftfahrzeug reduziert wird.

## Patentansprüche

1. Kraftfahrzeug (1) umfassend ein akustisches Fahrzeugwarnsystem (2), aufweisend eine Steuereinheit (3) und zumindest einen Lautsprecher (4), wobei
- die Steuereinheit (3) dazu eingerichtet ist, mittels des zumindest einen Lautsprechers (4) in einem Fahrbetrieb des Kraftfahrzeugs (1) ein Dauerschallzeichen abzugeben,
- die Steuereinheit (3) dazu eingerichtet ist, nach einer Betätigung einer Betätigungseinheit (6) des Kraftfahrzeugs (1), den zumindest einen Lautsprecher (4) über ein Betätigungssignal anzusteuern, und
- der zumindest eine Lautsprecher (4) dazu eingerichtet ist, nach Empfang des Betätigungssignals ein Warn-Schallzeichen auszugeben,
**dadurch gekennzeichnet, dass**
- sich der zumindest eine Lautsprecher (4) unter einer Frontschürze des Kraftfahrzeugs (1) befindet,
- der zumindest eine Lautsprecher (4) zur Reflexion des Warn-Schallzeichens durch einen Fahruntergrund in eine Hauptabstrahlrichtung nach unten auf den Fahruntergrund ausgerichtet ist, wobei die Hauptabstrahlrichtung die Bugrichtung des Kraftfahrzeugs (1) ist, und
- die Steuereinheit (3) dazu eingerichtet ist, die Ausgabe des Dauerschallzeichens durch den zumindest einen Lautsprecher (4) zwecks der Abgabe des Warn-Schallzeichens für den Zeitraum der Abgabe des Warn-Schallzeichens zu unterbrechen.

2. Kraftfahrzeug (1) nach Anspruch 1,
**dadurch gekennzeichnet, dass**
der zumindest eine Lautsprecher (4) dazu eingerichtet ist, das Warn-Schallzeichen in einem Frequenzbereich von 400-600 Hz mit einem Schalldruckpegel von mindestens 60 dB A, gemessen in 1 m Abstand, wiederzugeben.

## Claims

1. Motor vehicle (1) comprising an acoustic vehicle warning system (2), having a control unit (3) and at least one loudspeaker (4), wherein
- the control unit (3) is designed to emit a continuous sound signal by means of the at least one loudspeaker (4) during a driving operation of the motor vehicle (1),
- the control unit (3) is designed to actuate the at least one loudspeaker (4) by means of an actuation signal after an actuation of an actuation unit (6) of the motor vehicle (1), and
- the at least one loudspeaker (4) is designed to output a warning sound signal after the actuation signal has been received,
**characterised in that**
- the at least one loudspeaker (4) is located under a front apron of the motor vehicle (1),
- the at least one loudspeaker (4) for reflecting the warning sound signal is directed downwards onto the driving surface in a main emission direction by means of a driving surface, wherein the main emission direction is the direction towards the front of the motor vehicle (1), and
- the control unit (3) is designed to interrupt the output of the continuous sound signal by the at least one loudspeaker (4) for the purpose of emitting the warning sound signal for the time period of the emission of the warning sound signal.

2. Motor vehicle (1) according to claim 1,
**characterised in that**
the at least one loudspeaker (4) is designed to reproduce the warning sound signal in a frequency range of 400-600 Hz with a sound pressure level of at least 60 dB A, measured at a distance of 1 m.

## Revendications

1. Véhicule automobile (1) comprenant un système d'avertissement acoustique de véhicule (2), présentant une unité de commande (3) et au moins un haut-parleur (4), dans lequel
- l'unité de commande (3) est aménagée pour émettre un signal sonore permanent au moyen de l'au moins un haut-parleur (4) dans un mode de conduite du véhicule automobile (1),
- l'unité de commande (3) est aménagée pour piloter l'au moins un haut-parleur (4) par le biais d'un signal d'actionnement après un actionnement d'une unité d'actionnement (6) du véhicule automobile (1), et
- l'au moins un haut-parleur (4) est aménagé pour émettre un signal sonore d'avertissement après réception du signal d'actionnement,
**caractérisé en ce que**
- l'au moins un haut-parleur (4) se trouve sous une jupe avant du véhicule automobile (1),
- l'au moins un haut-parleur (4) est orienté pour la réflexion du signal sonore d'avertissement par une surface de roulement dans une direction de diffusion principale vers le bas sur la surface de roulement, dans lequel la direction de diffusion principale est la direction avant du véhicule automobile (1), et
- l'unité de commande (3) est aménagée pour interrompre l'émission du signal sonore permanent par l'au moins un haut-parleur (4) à des fins d'émission du signal sonore d'avertissement pendant la période d'émission du signal sonore d'avertissement.

2. Véhicule automobile (1) selon la revendication 1,
**caractérisé en ce que**
l'au moins un haut-parleur (4) est aménagé pour restituer le signal sonore d'avertissement dans une plage de fréquence de 400-600 Hz avec un niveau de pression acoustique d'au moins 60 dB A, mesuré à 1 m de distance.
